# DEMANDE DE BREVET EUROPEEN

(11) **EP 4 376 205 A1**
(43) Date de publication de la demande: **29.05.2024**
(21) Numéro de dépôt: 23209182.7
(22) Date de dépôt: 10.11.2023
(51) Int. Cl.: H01M 50/503, H01M 50/514, H01M 50/522, H01M 50/213, H01M 50/524, H01M 50/244, H01M 50/574

(54) **BUSBARS DE BATTERIE PARTICULAIRES**

(30) Priorité: 21.11.2022 FR 2212100
(71) Demandeur: Commissariat à l'énergie atomique et aux énergies alternatives, 75015 Paris (FR)
(72) Inventeur: PANARIELLO, Remy, 38054 GRENOBLE CEDEX 09 (FR); BEY, Mehdi, 38054 GRENOBLE CEDEX 09 (FR)
(74) Mandataire: Brevalex

(57) **Abrégé**

Structure d'interconnexion (2A) pour connecter entre elles des cellules (C₁, C₂) d'une batterie, ladite structure d'interconnexion comprenant :
un réceptacle d'accueil (10) pour un ensemble d'éléments conducteurs (21), ledit réceptacle étant doté d'au moins une paroi (11, 111) s'étendant en regard d'une première zone (Z₁₁) de contact, reliée à une borne négative ou positive d'au moins une première cellule (C₁) et une première zone (Z₁₂) contact, reliée à une borne négative ou positive d'au moins une deuxième cellule (C₂) d'un groupe de cellules (C₁, C₂),
ledit réceptacle d'accueil contenant un amas d'éléments conducteurs (21) en contact les uns des autres, et aptes à être disposés entre ladite paroi (11, 111) et lesdites premières zones de contact (Z₁₁, Z₁₂) de ladite première cellule (C₁) et de la deuxième cellule (C₂),
ledit réceptacle comprenant au moins une ouverture (31, 41) pour permettre d'introduire lesdits éléments conducteurs (21) dans ledit réceptacle et/ou d'évacuer lesdits éléments conducteurs (21) hors dudit réceptacle.

## Description

### DOMAINE TECHNIQUE ET ÉTAT DE LA TECHNIQUE ANTÉRIEURE

La présente demande concerne le domaine des batteries électriques, et vise plus particulièrement une structure d'interconnexion particulière pour cellules de batterie.

Une batterie électrique comprend classiquement une pluralité de cellules élémentaires de stockage d'énergie électrique rechargeables connectées en série et/ou en parallèle entre une borne positive et une borne négative de fourniture de tension de la batterie. Les cellules sont généralement disposées dans un boîtier de protection laissant accessible la borne positive et la borne négative de la batterie.

Les cellules élémentaires sont typiquement des piles ou accumulateurs électrochimiques. Dans une batterie, les cellules sont généralement reliées électriquement entre elles par le moyen de structures de collecteurs de courant métalliques encore appelés « busbars ». Dans la majorité des cas, ces collecteurs sont des pièces rigides et planes, assemblées par soudage aux cellules. L'assemblage est donc réalisé généralement de manière irréversible. Typiquement, la liaison électrique entre cellules ne peut être supprimée qu'en altérant ou en dessoudant le collecteur, ce qui risque d'altérer également les cellules.

Ainsi, si par exemple pour des raisons de sécurité ou de transport, on souhaite supprimer la connexion électrique entre certaines cellules, il serait souhaitable d'améliorer au moins en partie cet aspect.

### EXPOSÉ DE L'INVENTION

Selon un mode de réalisation, la présente invention concerne une structure d'interconnexion pour connecter entre elles des cellules d'une batterie, ladite structure d'interconnexion comprenant :
un réceptacle d'accueil pour un ensemble d'éléments conducteurs, le réceptacle étant doté d'au moins une première paroi, avantageusement isolante, s'étendant en regard d'une première zone de contact, reliée à une borne négative ou positive d'au moins une première cellule et une première zone contact, reliée à une borne négative ou positive d'au moins une deuxième cellule d'un groupe de cellules,
le réceptacle d'accueil contenant un amas d'éléments conducteurs en contact les uns des autres, et aptes à être disposés entre la première paroi et les premières zones de contact de la première cellule et de la deuxième cellule,
le réceptacle comprenant au moins une ouverture pour permettre une introduction des éléments conducteurs dans le réceptacle et/ou une évacuation des éléments conducteurs hors du réceptacle.

Une mise en connexion rapide des cellules peut être réalisée à l'aide d'une telle structure.

On peut également supprimer la liaison électrique établie par l'amas d'éléments conducteurs avec certaines cellules lorsqu'on évacue les éléments conducteurs hors du réceptacle.

Une telle structure offre également des facilités de démontage et de recyclage d'un assemblage de cellules.

Une connexion et/ou une déconnexion rapide des cellules, à moindre coût peut être mise en oeuvre avec une telle structure.

Une telle structure d'interconnexion est particulièrement adaptée pour la mise en sécurité de batterie dans le cadre d'assemblages, de désassemblages, de transport ou d'évènements redoutés.

Les éléments conducteurs également appelées « particules conductrices », sont des pièces solides de dimension micrométrique et/ou millimétriques ayant au moins un revêtement conducteur.

Les éléments conducteurs peuvent être sous forme de billes conductrices ou de particules conductrices, ou de cylindres conducteurs tels que des palets conducteurs ou des galets conducteurs ou des disques conducteurs.

L'amas d'éléments conducteurs a ainsi un comportement simili-fluide qui permet une connexion et/ou déconnexion rapide sans toutefois poser de problème de contrôle d'étanchéité.

La nature poreuse de l'amas conducteur peut également avantageusement permettre d'assurer le passage d'un fluide de refroidissement qui permet de réaliser un refroidissement au coeur de la structure d'interconnexion.

Une telle structure d'interconnexion est démontable aisément et peut être mise en oeuvre sans devoir réaliser de soudure.

Selon une possibilité de réalisation de la structure d'interconnexion, le réceptacle comprend, typiquement dans une région supérieure, une ouverture d'accueil, pour permettre l'introduction des éléments conducteurs dans le réceptacle.

Cette ouverture d'accueil peut éventuellement former une sortie d'évacuation des éléments conducteurs.

De préférence, le réceptacle comprend une ouverture de sortie formant une sortie d'évacuation des éléments conducteurs.

Dans ce cas, la structure d'interconnexion comprend typiquement un élément d'obturation déplaçable, entre au moins une première position dans laquelle l'élément d'obturation obture l'ouverture de sortie et au moins une deuxième position dans laquelle l'ouverture de sortie est dégagée de sorte à permettre l'évacuation des éléments conducteurs hors du réceptacle.

Selon un mode de réalisation particulier, le réceptacle comporte dans une région supérieure, une ouverture d'accueil, l'ouverture de sortie étant distincte de l'ouverture d'accueil et agencée en aval de l'ouverture d'accueil de sorte à permettre l'évacuation des éléments conducteurs hors du réceptacle par action de la force de gravité sur les éléments conducteurs. Optionnellement, une structure d'obturation de l'ouverture d'accueil peut également être prévue. Avantageusement, cette structure d'obturation peut être conductrice et jouer rôle de contact électrique.

Selon un mode particulièrement avantageux, l'élément d'obturation est conducteur et configuré pour, dans la première position, acheminer un potentiel électrique à l'amas d'éléments conducteurs. Dans ce cas, l'élément d'obturation peut être, dans sa première position, relié à la masse ou à un potentiel de polarisation donné. Cet élément d'obturation peut également former un contact électrique.

Avantageusement, le réceptacle comporte en outre une paroi de fond formée d'une zone conductrice avantageusement apte à être reliée à la masse ou à une alimentation ou à connecter un autre amas d'éléments conducteurs.

Selon un mode de réalisation particulier, cette paroi de fond est au moins en partie formée de l'élément obturateur.

Avantageusement, le réceptacle peut être doté d'une deuxième paroi, avantageusement isolante, en regard de ladite première paroi, la deuxième paroi comportant des trous d'accueil de la première cellule et de la deuxième cellule, les trous d'accueil s'étendant entre une première face principale et une deuxième face principale de la deuxième paroi, les trous d'accueil étant configurés pour dévoiler respectivement la première zone de contact de la première cellule et la première zone de contact de la deuxième cellule.

Selon une possibilité de mise en oeuvre, le réceptacle comprend en outre une plaque, d'épaisseur donnée, agencée entre la première paroi et la deuxième paroi, la plaque étant munie de fentes d'accueil des éléments conducteurs, les fentes d'accueil traversant l'épaisseur donnée de la plaque de manière à déboucher sur ladite première paroi.

Selon une possibilité de mise en oeuvre de la structure d'interconnexion ledit réceptacle d'accueil peut être isolant et/ou la première paroi peut être isolante et/ou la deuxième paroi peut être isolante, et/ou ladite plaque peut être isolante.

Selon un mode de réalisation avantageux, le réceptacle comprend une structure de mise en compression des éléments conducteurs dans les fentes d'accueil. On peut ainsi améliorer la qualité du contact électrique entre d'une part l'amas d'éléments conducteurs et d'autre part la première cellule et la deuxième cellule.

Selon un mode de réalisation particulier, les éléments conducteurs sont agencés en quinconce alternativement sur au moins une première rangée verticale d'éléments conducteurs et sur au moins une deuxième rangée verticale d'éléments conducteurs en contact avec la première rangée. Un tel agencement facilite la mise en compression de l'amas et l'obtention d'un contact électrique homogène.

Selon un autre aspect, la présente demande vise à protéger un assemblage un dispositif de batterie électrique comprenant :
- une structure d'interconnexion telle que définie précédemment,
- un assemblage de cellules, de préférence selon un agencement matriciel, l'assemblage de cellules comprenant la première cellule et la deuxième cellule.

La première cellule et la deuxième cellule peuvent être empilées dans l'assemblage.

L'assemblage de cellules peut être pourvu d'au moins une troisième cellule juxtaposée à la première cellule.

Avantageusement, dans le dispositif de batterie, la structure d'interconnexion est connectée à une première extrémité de la première cellule et de la deuxième cellule et le dispositif comprend en outre une deuxième structure d'interconnexion telle que définie précédemment, cette deuxième structure d'interconnexion étant disposée de sorte que l'assemblage de cellules est agencé entre la structure d'interconnexion et la deuxième structure d'interconnexion, la deuxième structure d'interconnexion étant quant à elle connectée à deuxième première extrémité de la première cellule et de la deuxième cellule opposées respectivement à la première extrémité de la première cellule et à la première extrémité de la deuxième cellule.

La deuxième structure d'interconnexion peut être connectée à au moins une autre cellule d'un autre groupe de cellules, la deuxième structure d'interconnexion étant disposée entre l'assemblage de cellules et l'autre groupe de cellules.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
La figure 1 illustre un premier mode de réalisation d'une structure d'interconnexion pour cellules de batterie formée d'un réceptacle et d'élément conducteurs millimétriques ou micrométriques dans ce réceptacle.
Les figures 2A et 2B illustrent différentes formes d'éléments conducteurs que la structure d'interconnexion est susceptible de contenir.
Les figures 3A, 3B et 3C illustrent différentes configurations de la structure d'interconnexion permettant alternativement le remplissage du réceptacle de ses éléments conducteurs et le vidage du réceptacle de ses éléments conducteurs.
La figure 4 illustre un agencement particulier de réceptacle et d'élément conducteurs millimétriques ou micrométriques dans ce réceptacle.
La figure 5 illustre un agencement particulier en quinconce des éléments conducteurs au sein du réceptacle.
La figure 6 illustre une configuration particulière pour laquelle des éléments isolants sont intercalés au sein du réceptacle entre deux étages d'éléments conducteurs afin de dissocier électriquement ces deux étages.
Les figures 7A et 7B illustrent un agencement particulier de réceptacle pour éléments conducteurs millimétriques ou micrométriques afin de réaliser une structure d'interconnexion.

En outre, dans la description ci-après, des termes qui dépendent de l'orientation du dispositif comme par exemple « verticale », « horizontale », s'appliquent en considérant que le dispositif est orienté de la façon illustrée dans les figures.

Des parties identiques, similaires ou équivalentes des différentes figures portent les mêmes références numériques de façon à faciliter le passage d'une figure à l'autre.

### EXPOSÉ DÉTAILLÉ DE MODES DE RÉALISATION PARTICULIERS

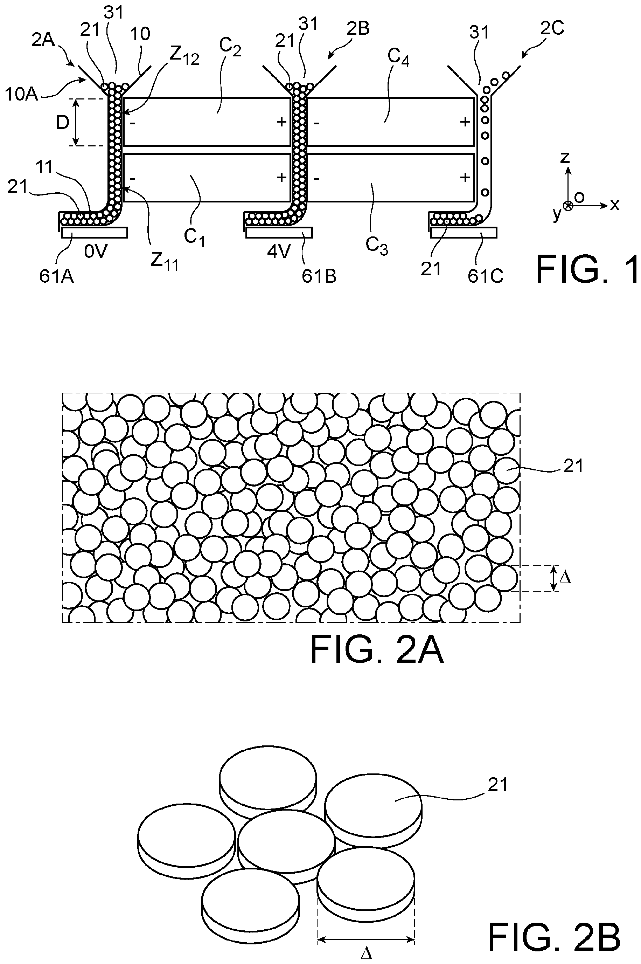

On se réfère à présent à la figure 1 donnant un exemple de réalisation d'une structure d'interconnexion 2A pour batterie.

La batterie, par exemple de type lithium-ion, est formée d'un ensemble de piles ou accumulateurs encore appelé(e)s cellules C₁, C₂, C₃, C₄, et reliées électriquement entre elles de façon à créer un générateur électrique de tension et de capacité désirées.

La structure d'interconnexion 2A est dotée d'un réceptacle 10 d'accueil voisin des cellules formé dans cet exemple d'au moins une enveloppe ou paroi réalisant ici une enceinte autour de régions, en particulier de régions d'extrémité de plusieurs cellules C₁, C₂. Le réceptacle 10 est prévu ici avantageusement d'au moins une paroi 11 en matériau isolant, par exemple un matériau plastique thermostable tel que du PEEK (polyétheréthercétone), un polymère thermoplastique tel que du polypropylène (PP), ou de l'acrylonitrile butadiène styrène (ABS), un polyamide (PA), un polycarbonate (PC).

Ce réceptacle 10 d'accueil contient un groupe, typiquement sous forme d'un amas ou d'un empilement d'éléments conducteurs 21 également appelés « particules », sous forme solide et en contact les un(e)s des autres. Les éléments conducteurs 21 peuvent prendre différentes formes. Par exemple, sur la figure 2A, les éléments conducteurs 21 ont une forme de bille, tandis que sur la figure 2B, les éléments conducteurs 21 une forme de cylindre plat, en particulier de galet ou de palet ou de disque. D'autres formes, par exemple de grain peuvent être prévues. On peut privilégier une unité de forme et de dimension des éléments conducteurs 21 entre eux. On peut également prévoir dans certains cas un remplissage avec des éléments conducteurs de tailles différentes afin si nécessaire de réduire au mieux les espaces vides au sein de l'amas d'éléments conducteurs et optimiser ainsi sa conductivité électrique.

Le choix du matériau des éléments conducteurs 21 est prévu de préférence de sorte à leur conférer les propriétés suivantes : une conductivité électrique élevée, une faible résistance de contact électrique, une résistance à la corrosion et à l'oxydation. Par exemple, les éléments conducteurs 21 peuvent être prévus en cuivre ou en laiton. Les éléments conducteurs 21 peuvent être également dotés en surface d'un revêtement particulier par exemple à base d'un ou plusieurs des matériaux métalliques suivants : nickel, argent, ou or. Un exemple de réalisation particulier prévoit des éléments conducteurs sous forme de disques en laiton avec un placage nickel/or.

Les éléments conducteurs 21 sont typiquement micrométriques ou millimétriques et ont une taille Δ qui est de préférence prévue en fonction de celle D (D étant ici une dimension mesurée parallèlement à l'axe z d'un repère orthogonal [O ; x ; y ; z] sur la figure 1) des zones de contact des cellules sur lesquelles elles sont amenées à établir un contact électrique.

La taille Δ des éléments conducteurs 21 est avantageusement comprise entre plusieurs dizaines de micromètres et plusieurs centimètres, en particulier entre plusieurs centaines de micromètres et plusieurs millimètres. On prévoit par exemple des éléments conducteurs 21 de taille Δ comprise entre 500 µm et 5 mm en particulier lorsque D est compris entre 2 mm et 10 mm.

Dans l'enceinte formée notamment par la paroi 11, des zones de contact Zn, Z₁₂ respectivement d'au moins une première cellule C₁ et d'au moins une deuxième cellule C₂ de la batterie sont dévoilées. Pour permettre une connexion électrique entre cette première cellule C₁ et cette deuxième cellule C₂, l'amas ou l'empilement d'éléments conducteurs 21 est agencé en regard et en contact avec une zone de contact Zn de la première cellule C₁ et avec une zone Z₁₂ de contact de la deuxième cellule C₂ dévoilées et en regard desquelles laquelle la paroi isolante 11 ne s'étend pas.

Ainsi, on réalise à l'aide d'une telle structure une ou plusieurs liaisons électriques inter-cellules (dans l'exemple de la figure 1 entre cellules superposées ou empilées) au moyen d'un milieu conducteur électrique au comportement semi-fluide.

Dans l'exemple de réalisation illustré sur la figure 1, le réceptacle 10 comporte une ouverture 31 située dans une région supérieure 10A de ce dernier. L'ouverture 31 est ici une ouverture d'accueil pour permettre l'introduction des éléments conducteurs 21.

Le réceptacle 10 peut permettre si besoin le transport et stockage de batteries sans que les éléments conducteurs 21 ne soient présents, les différentes cellules de la batterie étant alors isolées entre-elles et la batterie étant alors inactive ce qui apporte un gain de sécurité.

L'ajout des éléments conducteurs 21 peut être alors effectué seulement lorsque l'on souhaite rendre la batterie opérationnelle et utilisable, comme cela est représenté à droite de la figure 1.

Une fois la batterie activée par l'insertion des éléments conducteurs 21, on peut aussi dans certains cas, par exemple pour le transport de l'assemblage de cellules et/ou pour des raisons de sécurité, souhaiter supprimer la liaison électrique entre au moins plusieurs cellules de l'ensemble. Pour cela, on peut vider le réceptacle 10 de ses éléments conducteurs 21.

Le réceptacle 10 peut être ainsi doté d'au moins une sortie d'évacuation permettant l'évacuation des éléments conducteurs 21 hors dudit réceptacle 10.

Dans l'exemple de réalisation particulier illustré sur la figure 1, c'est l'ouverture 31 d'accueil qui forme ladite sortie d'évacuation desdits éléments conducteurs 21.

Un mode de réalisation amélioré prévoit une sortie d'évacuation par une ouverture 41 de sortie distincte de celle par laquelle les éléments conducteurs 21 sont introduits. Un tel mode de réalisation répond au besoin d'une déconnexion rapide en permettant une évacuation rapide des éléments conducteurs 21 hors du réceptacle 10.

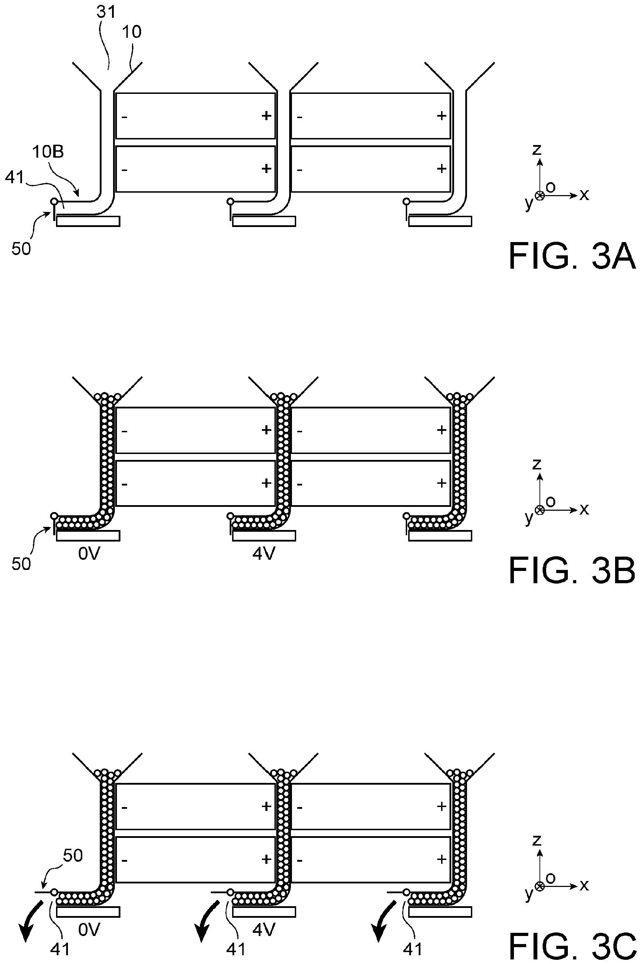

Dans l'exemple de réalisation illustré sur les figures 3A-3C, montrant respectivement le réceptacle 10 vide, le même réceptacle 10 rempli d'éléments conducteurs 21 et dans une première configuration, ce même réceptacle 10 rempli d'éléments conducteurs 21 dans une deuxième configuration dite « de vidage » par l'ouverture 41 de sortie.

L'ouverture 41 de sortie est située dans une région inférieure 10B du réceptacle 10 et peut être amenée à être obturée par le biais d'un élément obturateur 50 déplaçable entre plusieurs positions, et en particulier au moins une première position dite « fermée » (figures 3A et 3B) dans laquelle l'élément obturateur 50 obture ladite ouverture 41 de sortie et au moins une deuxième position dite « ouverte » (figure 3C) dans laquelle l'ouverture 41 de sortie est dégagée, afin de permettre une sortie des éléments conducteurs 21 par cette ouverture 41 de sortie.

L'élément obturateur 50 peut être par exemple sous forme d'une trappe, en particulier une trappe pivotante comme dans l'exemple de réalisation illustré sur les figures 3A-3C, ou bien par exemple d'une trappe glissante, c'est-à-dire déplaçable en translation. L'actionnement de l'élément obturateur 50 peut être mécanique ou électromécanique.

De manière optionnelle, le pilotage de la vidange peut être déclenché par le système de gestion de la batterie (BMS pour « Battery Management System »).

Ainsi, à l'aide d'une structure d'encombrement et de coût réduits, on peut au besoin remplir ou vider le réceptacle de ces éléments conducteurs 21, afin d'établir ou de rompre les liaisons électriques entre cellules C₁, C₂.

En position fermée de l'élément obturateur, l'amas d'élément conducteur est prévu pour garantir une continuité électrique. L'amas de conducteur a un comportement assimilable à un fluide. Ainsi, on peut au besoin « remplir » ou « vider » la structure de ces particules, afin d'assurer ou de rompre les liaisons électriques entre cellules et ce, pour un coût et un encombrement moindres par rapport aux solutions existantes. Toutefois, le fait de prévoir des éléments conducteurs ou des particules conductrices sous forme solide plutôt qu'un liquide conducteur rend le maintien étanche plus aisé et sans contrainte liée à la toxicité de certains liquides conducteurs comme le mercure.

Par ailleurs, l'ensemble de particules ou éléments conducteurs forme un milieu poreux qui est susceptible de permettre, en fonction de l'agencement du réceptacle 10, une circulation de fluide, en particulier d'air à l'intérieur du réceptacle 10 afin éventuellement de pouvoir réaliser un éventuel refroidissement.

On peut prévoir de se servir des éléments conducteurs comme d'un vecteur de gestion thermique au plus proche des cellules.

Le fluide mis en circulation peut lui-même, de par une mesure de sa température après avoir été mis en circulation à travers l'amas d'éléments conducteurs, être utilisé pour permettre d'identifier d'éventuels échauffements au sein de l'assemblage et en particulier au niveau de la structure d'interconnexion.

On peut également prévoir que les éléments conducteurs soient mis en circulation vers une source froide/chaude, puis remis au contact des cellules d'interconnexion.

Le remplissage et le vidage peuvent être réalisés rapidement. Par exemple consécutivement à une détection d'une défaillance électrique au sein de l'assemblage de cellules on effectue une vidange des éléments conducteurs de la structure d'interconnexion. L'élément obturateur 50 est alors amené dans la deuxième position dans laquelle la sortie d'évacuation est libérée. On peut également prévoir de vider le réceptacle 10 en vue d'un transport de l'assemblage de cellules, par exemple pour des raisons de sécurité ou pour empêcher une décharge intempestive de cellules.

Un assemblage de cellules C1, C2, C3, C4 peut être pourvu d'une pluralité de structures de connexion 2B, 2C telles que décrites précédemment. Ainsi, dans les exemples de réalisation illustrés sur les figures 1, 3A-3C, une première structure d'interconnexion 2A est agencée à une première extrémité d'un groupe de cellules C1, C2 ici empilées, tandis qu'à une autre extrémité opposée à la première extrémité, une deuxième structure d'interconnexion 2B est disposée et connectée au même groupe de cellules C1, C2. Différentes possibilités de mise en série ou en parallèle de cellules peuvent être réalisées.

Dans l'exemple de réalisation illustré, la première structure de connexion 2A permet de connecter entre elles les bornes négatives de différentes cellules, tandis que la deuxième structure de connexion 2B permet de connecter entre elles leurs bornes positives, mais d'autres types de connexion sont possibles en fonction du positionnement des bornes négatives et positives respectives de chaque cellule dans l'assemblage.

Une même structure de connexion peut être connectée à plusieurs groupes de cellules distincts. Ainsi, dans l'exemple illustré sur les figures 1, 3A-3B, la deuxième structure de connexion 2B est connectée à un premier empilement de cellules C1, C2 ainsi qu'à un deuxième empilement de cellules C3, C4. Dans cet exemple particulier, cette structure 2B permet une mise en série d'une cellule C1, C2 du premier empilement avec une cellule C3, C4 du second empilement. Une troisième structure de connexion 2C est connectée à une autre extrémité de l'empilement de cellules C3, C4 opposée à celle sur laquelle la deuxième structure de connexion 2B est agencée.

Outre une mise en connexion de cellules empilées c'est-à-dire situées dans un même plan vertical (plan parallèle au plan [O ;°x ;°z] sur les figures 1 et 3A-3C), une structure de connexion 2A, 2B telle que décrite précédemment peut également permettre de connecter entre elles des cellules juxtaposées, c'est à dire situées dans un même plan horizontal (plan parallèle au plan [O;x;y] sur la figure 1). La première structure de connexion 2A permet typiquement de connecter en parallèle les différentes cellules (non visibles sur les figures) d'une même rangée horizontale que la cellule C1.

Pour permettre la polarisation ou l'alimentation électrique des cellules, une zone conductrice 61A, 61B, 61C peut être associée à ou intégrée dans chaque structure 2A, 2B, 2C d'interconnexion et mise en contact avec une partie de l'amas d'éléments conducteurs 21 situé dans le réceptacle 10. Cette zone conductrice 61A, 61B, 61C par exemple sous forme d'une piste ou d'une bande métallique, peut avantageusement former une partie du réceptacle 10. Ainsi, dans l'exemple de réalisation particulier illustré sur les figures 1, 3A-3C, chaque zone conductrice 61A, 61B, 61C, forme une paroi du réceptacle 10, en particulier une paroi de fond du réceptacle 10.

L'amas d'éléments conducteurs 21 de la première structure 2A est ainsi en contact d'une zone conductrice 61A mise à un premier potentiel donné, par exemple correspondant au potentiel de masse ou de O volt. L'amas d'éléments conducteurs 21 de la deuxième structure 2B est quant à lui mis en contact avec une deuxième zone conductrice 61B mise à un deuxième potentiel, distinct du potentiel donné, par exemple de 4 volts.

La connexion des cellules entre elles et par rapport à leurs alimentations respectives se fait ici sans avoir à réaliser de soudure.

La déconnexion des cellules entre elles et par rapport à leurs alimentations respectives se fait ici sans avoir à réaliser de démontage ou dessoudage voire de destruction de pistes d'interconnexion ou des pôles des cellules.

De manière optionnelle, la vidange des réceptacles 10 respectifs des structures 2A, 2B, 2C d'interconnexion peut être réalisée simultanément et leurs éléments obturateurs 50 respectifs sont dans ce cas actionnés concomitamment.

Le réceptacle 10 contenant les éléments conducteurs 21 peut prendre une forme différente de celle exposée précédemment.

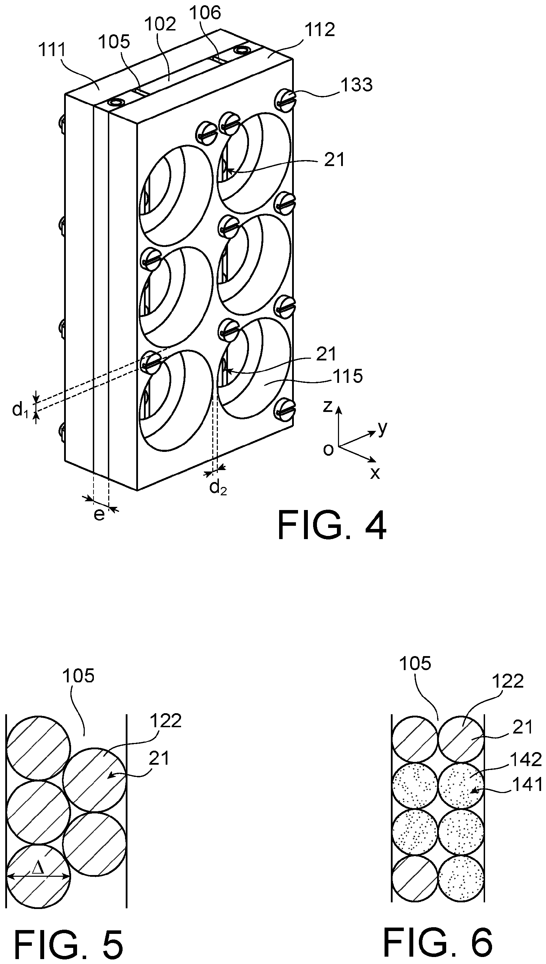

Dans l'exemple de réalisation illustré sur la figure 4, le réceptacle 10 est doté d'une plaque 102, typiquement en matériau isolant qui peut être choisi par exemple parmi les suivants : PP, ABS, PA, PC, PEEK avec des fentes 105, 106 dans laquelle les éléments conducteurs 21 sont empilés. Les fentes s'étendent d'une face principale à l'autre de la plaque 102, autrement dit ici à travers toute son épaisseur e (dimension mesurée parallèlement à l'axe x du repère orthogonal [O ;x ;y ;z] donné sur la figure 4.

L'épaisseur e de la plaque 102 correspondant à la hauteur des fentes 105, 106 peut être par exemple de plusieurs millimètres, par exemple de 5 mm, tandis que leur largeur d peut être plus petite, par exemple de l'ordre de 1,6 mm. Les fentes 105, 106 peuvent être conçues pour accueillir au moins une colonne de disques conducteurs. Ces disques sont par exemple de diamètre 4 mm et d'épaisseur 1,4 mm de manière à aisément coulisser dans les fentes 105, 106.

Des parois 111, 112 sont disposées de part et d'autre contre les faces principales de la plaque 102. Ces parois 111, 112 sont avantageusement isolantes. Les parois 111, 112 sont chacune munies de trous 115 traversant et débouchant sur des portions des fentes 105, 106 et de la plaque 102. Les trous 115 sont prévus pour accueillir les cellules d'accumulateur et en particulier au moins une zone de contact de ces cellules pour permettre une mise en connexion avec les éléments conducteurs.

De manière avantageuse, chaque trou d'accueil 115 peut être sous forme d'un logement dans lequel la cellule peut être maintenue.

Chaque trou 115 d'une paroi 111 est typiquement disposé en regard d'un autre trou 115 de la paroi 111 opposée. Ainsi, une mise en connexion, par exemple une mise en série, de différentes colonnes ou rangées verticales de cellules disposées en regard l'une de l'autre peut être mise en oeuvre.

Dans l'exemple de réalisation illustré, les trous 115 ont un agencement matriciel, pour permettre d'accueillir une matrice de cellules agencées en rangées horizontales (ou lignes) et en rangées verticales de cellules. Les différentes colonnes ou rangées horizontales de cellules peuvent être séparées par un espace d₂ typiquement de plusieurs millimètres, par exemple de 5 mm pour des cellules ayant elles-mêmes un diamètre de l'ordre 18 à 26 mm. Les différentes lignes de cellules peuvent également être séparées par un espace d₁ de plusieurs millimètres par exemple de 2 mm en particulier pour des cellules ayant le diamètre précité. Les cellules (non représentées sur cette figure) ne sont ainsi connectées entre elles que par le biais d'éléments conducteurs 21 situés dans les fentes.

Des moyens de fixation sont prévus pour maintenir l'ensemble des parois 111, 112 et la plaque 102 intermédiaire située entre ces parois 111, 112 solidaires. Un exemple de réalisation particulier prévoit des moyens de fixation 133 dotés de vis ou de boulons passant à travers une paroi isolante 112, la plaque 102, et une autre paroi isolante 111.

Un exemple particulier d'agencement des éléments conducteurs 21 dans le réceptacle 10 est donné sur la figure 5. Les éléments conducteurs 21, ici sous forme de disques conducteurs 122, ont un agencement dit « en quinconce » c'est-à-dire en rangées décalées et en contact l'une de l'autre d'éléments conducteurs dans la rainure 105 ou fente d'accueil de la plaque 102. Une telle configuration permet de maintenir un contact électrique de bonne qualité et une bonne uniformité de résistance de contact d'une extrémité à l'autre de la structure d'interconnexion. Toutefois, une seule colonne de disques conducteurs peut également permettre d'obtenir un bon contact électrique.

Selon une variante de configuration, dans le réceptacle 10 d'éléments conducteurs 21, et en particulier lorsque ces éléments conducteurs 21 sont agencées en rangées verticales d'éléments conducteurs 21 empilées, on peut prévoir d'introduire des éléments 161 isolants afin de ne pas connecter entre elles certaines cellules superposées.

Ainsi, dans l'exemple de réalisation particulier illustré sur la figure 6, des éléments 141 isolants par exemple sous forme de disques isolants 142 sont disposés en amas entre deux groupes de disques conducteurs 122 afin d'établir une discontinuité électrique, ces deux groupes de disques conducteurs et les cellules d'accumulateurs qui sont en contact avec eux n'étant pas connectés entre eux.

En introduisant dans une fente 105, 106 des particules isolantes électriques, on peut avantageusement imposer différents potentiels électriques sur différentes cellules d'une même colonne.

Dans un agencement d'éléments conducteurs 21 empilés tel qu'illustré sur la figure 5, la résistance électrique peut être avantageusement diminuée en appliquant une pression au sommet de la colonne d'éléments conducteurs 21. Ainsi, une structure de mise en compression de l'amas d'éléments conducteurs 21 disposés dans le réceptacle 10 de la structure d'interconnexion peut être prévue.

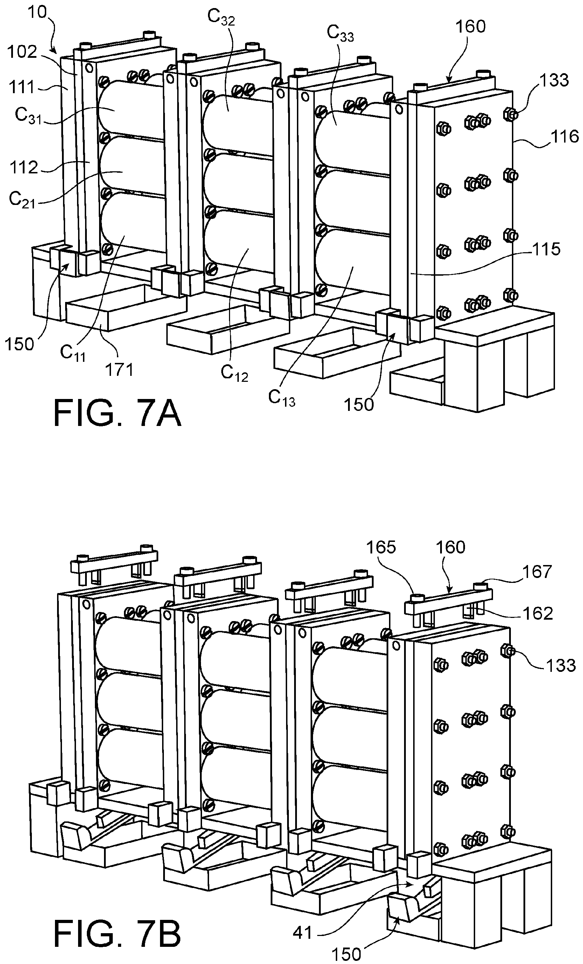

Dans l'exemple de réalisation particulier illustré sur les figures 7A, 7B, une structure 160 de mise en compression des éléments conducteurs est ainsi prévue. Cette structure 160 comporte un ou plusieurs embouts 162 souples configurés pour pénétrer dans les fentes 105 et appliquer une pression sur les amas d'éléments conducteurs 21, par exemple sous forme de disque. Les embouts 162 souples peuvent être réalisés par exemple en matière élastomère. Les embouts 162 sont ici agencés sur un support rigide, par exemple sous forme d'une barre 165. La structure 160 de mise en compression est, dans l'exemple illustré, dotée d'éléments de fixation, par exemple sous forme de vis 167 permettant de maintenir la barre contre la plaque 102. La barre 165 forme également un élément de fermeture du réceptacle 10 dans lequel les éléments conducteurs sont disposés.

La structure 160 de mise en compression en partie supérieure des colonnes, permet d'exercer une force verticale sur les colonnes d'éléments conducteurs, par exemple de disques conducteurs. L'embout souple permet d'homogénéiser la pression, et la maintenir en cas de chocs ou vibrations.

Là encore, pour permettre de supprimer la connexion entre cellules et éventuellement supprimer l'alimentation électrique des cellules, un élément obturateur 50 sous forme de trappe est déplacé pour permettre la libération des éléments ou disques conducteurs hors des fentes.

Dans l'exemple de réalisation particulier des figures 7A-7B, illustrant respectivement la position de fermeture du réceptacle 10 et une position d'ouverture du réceptacle 10, des récipients 171 de collecte peuvent être prévus en aval de la sortie 41 d'évacuation afin de récupérer les éléments conducteurs 21.

Dans cet exemple et comme pour les exemples de réalisation présentés précédemment, disposant d'une sortie en partie basse, c'est la gravité, éventuellement aidée d'une force de compression qui peut aider au vidage voire assurer le vidage des éléments conducteurs (non représentés sur cette figure) par une forme d'écoulement.

Lorsque l'on remplit les fentes (non visibles sur les figures) du réceptacle 10 d'éléments conducteurs (non visibles sur les figures), une liaison électrique se créé entre les faces des cellules C₁₁, C₂₁, C₃₁ d'une même colonne, ainsi qu'avec les faces des cellules C₁₂, C₂₂, C₃₂ d'une colonne adjacente. Cela se traduit dans cet exemple par une mise en parallèle des cellules C₁₁, C₂₁, C₃₁ d'une même colonne, et d'une mise en série des cellules C₁₁ et C₁₂ (resp. C₂₁ et C₂₂, C₃₁ et C₃₂) de deux colonnes consécutives.

Dans une région inférieure des colonnes de cellules, l'élément obturateur 150 est ici sous forme d'une trappe composée d'au moins une pièce conductrice. L'élément obturateur 150 peut ainsi servir ici à la fois de paroi de fond au réceptacle 10 et à réaliser une connexion électrique. Par exemple cette pièce conductrice est prévue pour relier électriquement des rangées voisines d'amas conducteurs voir des amas conducteurs reliés à des colonnes de cellules distinctes voisines et juxtaposées.

L'élément obturateur 150 peut être mis en position ouverte par exemple en faisant pivoter la trappe autour d'une charnière, afin de libérer la sortie d'évacuation 51 et pouvoir libérer les disques conducteurs de la colonne (figure 7B).

Certaines cellules électrochimiques disposent de leurs pôles négatif et positif sur une même face. Dans ce cas, on prend typiquement soin d'ajouter une pièce isolante, par exemple un film isolant ou une couche isolante, afin de ne pas court-circuiter les deux bornes d'une même cellule avec un même amas d'éléments conducteurs.

## Revendications

1. Structure d'interconnexion (2A) pour connecter entre elles des cellules (C₁, C₂) d'une batterie, ladite structure d'interconnexion comprenant un réceptacle d'accueil (10) pour un ensemble d'éléments conducteurs (21), ledit réceptacle étant doté d'au moins une première paroi (11, 111), avantageusement isolante, et d'une deuxième paroi (112) en regard de ladite première paroi (11), ladite deuxième paroi comportant des trous (115) d'accueil d'une première cellule (C1) et d'une deuxième cellule (2) d'un groupe de cellules (C₁, C₂), lesdits trous (115) s'étendant entre une première face principale et une deuxième face principale de la deuxième paroi (112), lesdits trous d'accueil (115) étant configurés pour dévoiler respectivement une première zone (Zn) de contact de la première cellule (C₁) et une première zone (Z₁₂) de contact de la deuxième cellule (C₂),
ledit réceptacle d'accueil étant configuré pour contenir un amas d'éléments conducteurs (21) en contact les uns des autres, et aptes à être disposés entre ladite première paroi (11, 111) et lesdites premières zones de contact (Z₁₁, Z₁₂) de ladite première cellule (C₁) et de la deuxième cellule (C₂), ledit réceptacle comprenant au moins une ouverture (31, 41) pour permettre un remplissage dudit réceptacle par lesdits éléments conducteurs et/ou une évacuation desdits éléments conducteurs (21) hors dudit réceptacle.

2. Structure d'interconnexion selon la revendication 1, dans lequel ledit réceptacle (10) comprend une ouverture (41) de sortie formant une sortie d'évacuation desdits éléments conducteurs (21), ladite structure (2A) comprenant en outre un élément d'obturation (50, 150) déplaçable, entre au moins une première position dans laquelle l'élément d'obturation (50, 150) obture ladite ouverture (41) de sortie et au moins une deuxième position dans laquelle l'ouverture (41) de sortie est dégagée de sorte à permettre l'évacuation des éléments conducteurs (21) hors dudit réceptacle.

3. Structure d'interconnexion selon la revendication 2, dans lequel ledit réceptacle (10) comprend, dans une région supérieure (10A), une ouverture (31) d'accueil, et dans lequel ladite ouverture (41) de sortie est distincte de l'ouverture (31) d'accueil et agencée en aval de ladite ouverture d'accueil de sorte à permettre l'évacuation des éléments conducteurs (21) hors dudit réceptacle (10) par action de la force de gravité sur les éléments conducteurs (21).

4. Structure d'interconnexion selon l'une des revendications 2 ou 3, dans lequel le réceptacle (10) est doté d'une paroi de fond au moins en partie formée de l'élément obturateur (50, 150).

5. Structure d'interconnexion selon l'une des revendications 1 à 4, dans lequel, ledit réceptacle (10) comporte en outre une paroi (61A) de fond formée d'une zone conductrice (112, 150) avantageusement apte à être reliée à la masse ou à une alimentation ou à connecter un autre amas d'éléments conducteurs.

6. Structure d'interconnexion selon l'une des revendications 1 à 5, dans lequel les trous d'accueil (115) de la deuxième paroi sont disposés en regard respectivement de trous d'accueil (115) de la première paroi opposée à la deuxième paroi et/ou dans lequel les trous d'accueil ont un agencement matriciel dans la deuxième paroi avec une ou plusieurs rangées de trous d'accueil superposés et/ou juxtaposés.

7. Structure d'interconnexion selon la revendication 6, dans lequel ledit réceptacle (10) comprend en outre une plaque (102) d'épaisseur donnée, ladite plaque (102) étant agencée entre la première paroi (111) et la deuxième paroi (112), ladite plaque (102) étant munie de fentes (105, 106) d'accueil desdits éléments conducteurs (21), lesdites fentes d'accueil traversant l'épaisseur donnée de ladite plaque de manière à déboucher sur ladite première paroi (111).

8. Structure d'interconnexion selon la revendication 7, dans lequel ledit réceptacle d'accueil est isolant et/ou dans lequel la première paroi (111) est isolante et/ou dans lequel la deuxième paroi (112) est isolante, et/ou dans lequel ladite plaque (102) est isolante.

9. Structure d'interconnexion selon l'une des revendications 7 ou 8, dans lequel ledit réceptacle comprend une structure (160) de mise en compression des éléments conducteurs (21) dans lesdites fentes (105, 106) d'accueil.

10. Structure d'interconnexion selon l'une des revendications 1 à 9, dans lequel les éléments conducteurs (21) sont sous forme de billes conductrices ou de particules conductrices, ou de cylindres conducteurs tels que des palets conducteurs ou des galets conducteurs ou des disques conducteurs.

11. Structure d'interconnexion selon l'une des revendications 1 à 10, dans lequel les éléments conducteurs sont agencés en quinconce alternativement sur au moins une première rangée verticale d'éléments conducteurs et sur au moins une deuxième rangée verticale d'éléments conducteurs en contact avec la première rangée.

12. Dispositif de Batterie électrique comprenant :
- une structure d'interconnexion selon l'une des revendications 1 à 11,
- un assemblage de cellules, de préférence selon un agencement matriciel, ledit assemblage de cellules comprenant ladite première cellule et ladite deuxième cellule.

13. Dispositif selon la revendication 12, dans lequel la première cellule et la deuxième cellule sont empilés dans ledit assemblage, ledit assemblage étant pourvu d'au moins une troisième cellule juxtaposée à la première cellule.

14. Dispositif selon l'une des revendications 12 ou 13 dans lequel ladite structure d'interconnexion (2A) est connectée à une première extrémité de ladite première cellule et de ladite deuxième cellule, le dispositif comprenant en outre une deuxième structure d'interconnexion selon l'une des revendications 1 à 11, ladite deuxième structure d'interconnexion étant disposée de sorte que l'assemblage de cellules est agencé entre ladite structure d'interconnexion et ladite deuxième structure d'interconnexion, ladite deuxième structure d'interconnexion étant connectée à la deuxième extrémité de ladite première cellule et de ladite deuxième cellule opposée à la première extrémité.

15. Dispositif selon la revendication 14, dans lequel la deuxième structure d'interconnexion est connectée à au moins une autre cellule d'un autre groupe de cellules, ladite deuxième structure d'interconnexion étant disposée entre ledit assemblage de cellules et ledit autre groupe de cellules.
